# FASCICULE DE BREVET EUROPEEN

(11) **EP 2 905 596 B1**
(45) Date de publication et mention de la délivrance du brevet: **12.04.2017**
(21) Numéro de dépôt: 15153575.4
(22) Date de dépôt: 03.02.2015
(51) Int. Cl.: G01M 3/28, F24F 11/04, G05D 7/00, F24F 11/00

(54) **Procédé de diagnostic d un ensemble de ventilation à simple flux ou double flux et ensemble de ventilation associé**
Verfahren zur Diagnose einer Belüftungsanordnung mit einfachem oder doppeltem Fluss, und entsprechende Belüftungsanordnung
Method for diagnosing a single-flow or double-flow ventilation assembly and associated ventilation assembly

(30) Priorité: 10.02.2014 FR 1451007
(43) Date de publication de la demande: 12.08.2015
(73) Titulaire: ALDES AERAULIQUE, 69200 Venissieux Cedex (FR)
(72) Inventeur: Buseyne, Serge, 31200 TOULOUSE (FR); Labaume, Damien, 31570 PRESERVILLE (FR)
(74) Mandataire: Chevalier, Renaud Philippe

(56) Documents cités:
- FR-A1- 2 811 759
- US-A- 5 540 619
- US-A1- 2010 163 633

## Description

L'invention concerne le domaine des installations de Ventilation Mécanique Contrôlée (VMC) et plus particulièrement, un procédé de diagnostic de ces installations dans le cadre de leur mise en place dans un bâtiment de logements individuels ou collectifs.

Classiquement, les bâtiments sont équipés de systèmes dits de « simples flux » ou de « double flux » permettant de ventiler les pièces des logements du bâtiment afin d'évacuer les pollutions spécifiques liées à la présence des occupants et d'évacuer les pollutions spécifiques liées au bâtiment lui-même.

On entendra par système de simple flux, un système qui permet le balayage de l'air provenant de l'extérieur vers les pièces dites principales, puis vers les pièces techniques pour être ensuite extrait par des conduits et rejeté par un ventilateur vers l'extérieur.

On entendra par système de double flux, un système permettant le balayage de l'air provenant de l'extérieur comme décrit au paragraphe précédent et permettant également l'insufflation d'air par un ventilateur via un réseau de conduits et des bouches d'insufflation.

On entendra par pièces principales, les pièces d'un logement telles que la salle à manger, les chambres, le salon ne nécessitant qu'une extraction d'air indirecte.

On entendra par pièces techniques, les pièces d'un logement nécessitant une ventilation par extraction, telles que les toilettes, la cuisine et la salle de bain.

Lors de l'installation de ces systèmes de ventilation de simple flux ou double flux, on installe également un réseau de conduits permettant l'acheminement et l'extraction de l'air et couvrant l'ensemble de chaque logement du bâtiment.

On entendra par réseau de conduits un système comprenant une pluralité de conduits qui sont contrôlés et régis par un même ensemble de ventilation.

De manière connue, le réseau de conduits est réalisé par un assemblage de plusieurs composants tels que des gaines, des raccords, des manchettes, etc. Un mauvais assemblage de ces composants peut engendrer des débits parasites susceptibles d'augmenter les pertes thermiques et de perturber la répartition de la ventilation pénalisant ainsi la qualité de la ventilation de certaines pièces du logement.

En outre, une mauvaise disposition des conduits peut entraîner l'écrasement ou la déchirure des gaines, empêchant ainsi d'atteindre au niveau des bouches des conduits le débit d'air souhaité.

Conventionnellement, pour pallier les inconvénients précités, on utilise des appareils de mesure distincts permettant de vérifier, dès l'installation du système, la perméabilité des conduits et la bonne obtention des débits.

Or, il est souvent délicat de contrôler le débit car les appareils de mesure sont encombrants et ne permettent pas d'atteindre les bouches d'extraction et/ou d'insufflation qui sont souvent en accès très restreint.

En outre, les appareils de mesure de la perméabilité du réseau de conduits nécessitent qu'un opérateur spécialisé démonte provisoirement certains conduits du réseau pour mesurer la perméabilité d'un conduit, ce qui augmente le risque de dégradation des conduits et les manipulations à répétition entraînent une baisse des performances initiales de chaque conduit.
De plus, les appareils de mesure décrits précédemment sont très coûteux et les installateurs n'en disposent que rarement.

On connait du brevet FR 2 811 759 B1 un procédé de mesure d'étanchéité qui permet de mesurer la perméabilité globale du réseau de conduits via un manomètre et un débitmètre positionnés dans le caisson du ventilateur respectivement en amont et en aval du ventilateur. Ce procédé ne permet cependant pas, d'une part, une mesure précise conduit par conduit, et d'autre part, d'identifier quel conduit est perméable en cas de défaut constaté. De plus, ce procédé ne permet pas non plus de contrôler le débit d'air à chaque bouche d'extraction et/ou d'insufflation du réseau de conduits, pour vérifier la bonne mise en place du réseau de conduits.

On connait de la demande de brevet EP 2 363 656 A2 un procédé de préréglage permettant de réaliser un réglage optimisé des différents registres des conduits pour obtenir un débit d'air préréglé. Cependant, ce procédé ne permet pas de mesurer la perméabilité de chaque conduit et notamment entre le registre et la bouche d'extraction et/ou d'insufflation de chaque conduit, ce qui empêche d'identifier un défaut de perméabilité et de s'assurer que le débit en sortie de bouche correspond bien au débit préréglé en amont.

L'invention a pour but de remédier à tout ou partie des inconvénients précités.

L'invention a pour objet un procédé de diagnostic d'un ensemble de ventilation comprenant au moins un ventilateur, un conduit de refoulement, un réseau de conduits comprenant au moins deux conduits comprenant chacun au moins une bouche d'extraction et/ou une bouche d'insufflation d'air, au moins un registre positionné dans chaque conduit, une unité de contrôle adaptée pour contrôler ledit registre, caractérisé en ce que le procédé de diagnostic est réalisé au niveau d'au moins un conduit et comprend les étapes suivantes :
- étape A : prévoir au moins un organe de mesure conçu pour mesurer le débit d'air en entrée ou en sortie du registre dans chaque conduit, ledit organe de mesure étant commandé par l'unité de contrôle,
- étape B : obturer la ou les bouches du conduit à tester,
- étape C : mettre en fonctionnement le ventilateur à une pression de fonctionnement déterminée,
- étape D : mesurer le débit d'air du conduit par l'intermédiaire de l'organe de mesure,
- étape E : déterminer la perte de charge réelle du registre,
- étape F : déterminer la pression réelle du conduit en soustrayant la perte de charge réelle du registre à la pression de fonctionnement déterminée appliquée au niveau du ventilateur.
- étape G: déterminer la valeur de débit de fuite du conduit en fonction de la pression réelle du conduit déterminée à l'étape F et du débit d'air du conduit mesuré en étape D.

Grâce au procédé de diagnostic de l'invention, il n'est plus nécessaire de faire appel à des appareils de mesure spécifiques extérieurs à l'ensemble de ventilation ni à une main d'oeuvre spécialisée pour diagnostiquer l'ensemble de ventilation dès sa mise en place dans un logement.

En outre, comme le procédé de diagnostic de l'invention est mis en oeuvre pour un conduit, ce procédé permet d'identifier précisément un défaut d'étanchéité sur ce conduit en déterminant une valeur de débit de fuite correspondant à la perméabilité du conduit en fonction de la pression réelle du conduit déterminée à l'étape F.

Selon l'invention, les étapes D à G peuvent être itérées pour chaque conduit de l'ensemble de ventilation, et ce, de manière indépendante, ce qui permet de déterminer, le cas échéant, le conduit présentant un défaut.

Avantageusement, la valeur de débit de fuites du conduit est exprimée en m3/h sous la pression réelle du conduit déterminée à l'étape F.

Selon une caractéristique de l'invention, la détermination de la perte de charge réelle du registre effectuée à l'étape E est opérée en:
- E1 : mesurant le débit d'air s'écoulant dans le conduit au moyen de l'organe de mesure,
- E2 : déterminant la position angulaire du registre sous la commande de l'unité de contrôle de l'ensemble de ventilation, et,
- E3 : calculant la perte de charge résultante en fonction du débit mesuré en E1 et de la position du volet mesurée en E2.

Alternativement, la perte de charge réelle du registre peut être mesurée directement de part et d'autre du registre au moyen de l'organe de mesure.

Selon une autre caractéristique de l'invention, le procédé de diagnostic comprend les étapes supplémentaires suivantes :
- étape H : mettre en fonctionnement le ventilateur à une autre pression de fonctionnement déterminée,
- étape I : réitérer les étapes D, E, F et G
- étape K : déterminer une équation caractérisant la perméabilité du conduit à partir des différentes valeurs de débit de fuites obtenues à chaque itération de l'étape G.

Selon l'invention, pour plus de précision dans le diagnostic de perméabilité, le procédé comprend une étape J réalisée avant l'étape K et consistant à réitérer les étapes H et I. De manière avantageuse, plus on itère les étapes H et I, plus l'équation de perméabilité déterminée à l'étape K est précise.

Pour la bonne compréhension de l'invention, plusieurs définitions de termes utilisés sont exposées ci-après :
- la pression de fonctionnement déterminée correspond à la pression appliquée au niveau du ventilateur,
- la perte de charge réelle du registre correspond à la perte de charge mesurée au niveau du conduit et déduite à partir soit d'un calcul basé sur des mesures de débits soit basée sur une mesure réelle de la perte de charge,
- la pression réelle du conduit correspond à la pression dans le conduit et déduite à partir soit d'un calcul pendant le procédé de diagnostic soit d'une mesure directe,
- la valeur de débit de fuite correspond à une valeur permettant d'identifier le taux de perméabilité du conduit,
- l'équation caractérisant la perméabilité du conduit correspond à une équation permettant de déduire un débit de fuite précis du conduit.

Selon une autre caractéristique de l'invention, le procédé de diagnostic est réalisé pour un réseau de conduits de l'ensemble de ventilation, chaque conduit du réseau étant diagnostiqué indépendamment.

Selon une autre caractéristique de l'invention, le procédé est réalisé pour chaque conduit de l'ensemble de ventilation et comprend une étape d'identification K' de la classe de perméabilité de l'ensemble de ventilation à partir de l'équation de perméabilité de chaque conduit issue de l'étape K et des dimensions de chaque conduit.

Selon une caractéristique de l'invention, le procédé de diagnostic comprend les étapes supplémentaires suivantes :
- étape L : ouvrir la ou les bouches du conduit à tester ou vérifier que la ou les bouches du conduit sont ouvertes,
- étape M : envoyer à un registre du conduit à tester, une consigne correspondant à un débit global théorique du conduit,
- étape N : déterminer une pression de fonctionnement théorique de l'ensemble de ventilation, en ajoutant à une pression théorique du conduit soumise au débit global théorique du conduit selon l'étape M, une perte de charge théorique du registre dudit conduit non soumise au débit global théorique du conduit,
- étape O: mettre en fonctionnement le ventilateur de manière à atteindre le débit global théorique du conduit et la pression de fonctionnement théorique de l'ensemble de ventilation déterminée à l'étape N,
- étape P : comparer la perte de charge réelle du registre déterminée à l'étape E avec la perte de charge théorique du registre, lorsque la perte de charge réelle du registre est inférieure à la perte de charge théorique, un défaut sur la ou les bouches du conduit testé ou sur le conduit est identifié.

Préférentiellement, la perte de charge théorique du registre est sensiblement égale à 30 Pa.

Selon l'invention, le débit global théorique du conduit est déterminé en tenant en compte de l'usage de l'ensemble de ventilation. Par exemple, pour un conduit desservant une salle de bain, le débit global théorique peut être de sensiblement 30m³/h alors que pour un conduit similaire desservant une cuisine, le débit global théorique de ce conduit est sensiblement de 135 m³/h. Bien entendu ces valeurs sont données à titre d'exemples et ne limitent en rien l'invention.

Selon une autre caractéristique de l'invention, le procédé de diagnostic comprend les étapes suivantes :
- étape Q: envoyer une autre consigne correspondant au débit global théorique du conduit selon l'étape M auquel on ajoute un débit de fuite déterminé à l'étape G ou K soumis à la pression théorique déterminée du conduit selon l'étape N.
- étape R: itérer les étapes N et Q de sorte qu'un équilibre entre la pression théorique du conduit et le débit global théorique du conduit soit atteint,
les étapes Q et R étant réalisées préférentiellement successivement entre les étapes N et O.

Préférentiellement, les étapes Q et R sont réalisées lorsque la valeur de débit de fuite déterminée à l'étape G ou K est supérieure à sensiblement 2 m³/h sous 30 Pa de pression.

Selon une autre caractéristique de l'invention, le procédé peut comprendre une étape supplémentaire M' consistant à envoyer une consigne de débit global théorique dit faible aux autres registres des autres conduits de l'ensemble de ventilation. On entend par débit global théorique faible, un débit global théorique faible inférieur au débit global théorique utilisé sur le conduit à tester. Cette étape M' permet de maîtriser le débit global théorique du conduit à tester, la consigne de débit global théorique faible étant réalisée de préférence sensiblement en même temps que l'étape M. Préférentiellement, la consigne de débit global théorique faible est de l'ordre de sensiblement 10m³/h.

Pour la bonne compréhension de l'invention, plusieurs définitions de termes utilisés sont exposées ci-après :
- le débit global théorique du conduit correspond à un débit maximal passant dans le conduit au niveau de la ou les bouches du conduit,
- la pression de fonctionnement théorique de l'ensemble de ventilation correspond à la pression appliquée au niveau du ventilateur et déterminée de façon théorique,
- la pression théorique du conduit correspond à la pression supposée au sein du conduit,
- la perte de charge théorique du registre dudit conduit correspond à la perte de charge supposée du registre, cette supposition étant basée en tenant compte du type de registre et des dimensions de ce dernier,
- l'équilibre entre la pression théorique du conduit et la pression donnant le débit global théorique du conduit tenant compte des fuites est atteint quand la pression théorique du conduit donne le même débit de fuite

Selon une caractéristique de l'invention, les étapes L à P, incluant ou excluant les étapes Q et R, peuvent être réitérées pour chaque registre de chaque conduit.

Avantageusement, les étapes L à P, incluant ou excluant les étapes Q et R, peuvent être réalisées après l'étape G ou après l'étape K ou K'.

Selon une autre caractéristique de l'invention, le procédé comprend une évaluation du refoulement de l'ensemble de ventilation par vérification de l'obtention d'un débit global théorique au niveau de l'ensemble de ventilation par rapport à un débit global théorique prédéterminé. L'évaluation du refoulement permet de vérifier s'il existe un problème au niveau du conduit refoulement de l'ensemble de ventilation.

Selon une caractéristique de l'invention, le procédé de diagnostic comprend les étapes suivantes :
- étape S : envoyer une consigne regroupant l'ensemble des consignes de débit global théorique envoyée à chaque registre de chaque conduit selon l'étape M,
- étape T : déterminer la pression théorique de chaque conduit soumise au débit global théorique de chaque conduit.
- étape U : identifier le conduit du réseau le plus défavorisé, en comparant la pression réelle déterminée pour chaque conduit à l'étape F, le conduit présentant la pression réelle la plus importante étant le conduit le plus défavorisé du réseau,
- étape V : calculer la pression théorique de l'ensemble de ventilation en ajoutant une perte de charge théorique du registre du conduit le plus défavorisé, la perte de charge théorique étant soumise à la pression théorique du conduit le plus défavorisé,
- étape W : ajouter l'ensemble des consignes de débit global théorique de chaque registre à un ensemble de débit de fuite de chaque conduit selon l'étape G ou K, chaque débit de fuite étant soumis à la pression de fonctionnement théorique de l'ensemble de ventilation
- étape X : mettre en fonctionnement le ventilateur pour obtenir l'ensemble des consignes de débit global théorique de chaque registre et la pression théorique,
- étape Y : comparer la perte de charge réelle du registre du conduit le plus défavorisé avec la perte de charge théorique du registre dudit conduit le plus défavorisé, lorsque la perte de charge réelle du registre du conduit le plus défavorisé est inférieure à la perte de charge théorique du registre dudit conduit le plus défavorisé alors le conduit de refoulement de l'ensemble de ventilation présente un défaut.

Selon une caractéristique de l'invention, le procédé de diagnostic peut comprendre une étape supplémentaire Z consistant à augmenter du débit du ventilateur jusqu'à obtention des débits de chaque conduit pour vérifier si l'ensemble de ventilation est installé correctement par rapport à des critères prédéterminés de conformité standard. L'étape Z est réalisée avantageusement après l'étape Y.

Avantageusement, l'étape S est réalisée après l'étape K ou K' ou après l'étape P.

L'invention concerne également un ensemble de ventilation comprenant au moins un ventilateur, un réseau de conduits comprenant au moins deux conduits comprenant chacun au moins une bouche d'extraction et/ou une bouche d'insufflation d'air, au moins un registre positionné dans chaque conduit, une unité de contrôle adaptée pour contrôler ledit registre, caractérisé en ce que l'ensemble comprend au moins un organe de mesure conçu pour mesurer le débit d'air en entrée ou en sortie du registre de chaque conduit, ledit organe étant commandé par l'unité de contrôle.

Avantageusement, l'organe de mesure est un débitmètre. Préférentiellement, au moins un organe de mesure est intégré sur chaque registre.

Selon l'invention, l'ensemble de ventilation est conçu pour mettre en oeuvre le procédé de diagnostic décrit ci-dessus, dès son installation dans un logement.

L'invention sera mieux comprise, grâce à la description ci-après, qui se rapporte à deux modes de réalisation selon la présente invention, donnés à titre d'exemples non limitatifs et expliqués avec référence aux dessins schématiques annexés dans lesquels :
- la figure 1 est une représentation schématique d'un ensemble de ventilation selon l'invention,
- la figure 2 est un ordinogramme représentant les étapes du procédé selon un premier mode de réalisation de l'invention,
- la figure 3 est un ordinogramme représentant les étapes du procédé selon un deuxième mode de réalisation de l'invention,
- la figure 4 est un ordinogramme représentant des étapes optionnelles selon le premier mode de réalisation représenté en figure 2, et,
- la figure 5 est un ordinogramme représentant des étapes optionnelles selon le deuxième mode de réalisation représenté en figure 3.

Selon l'invention, l'ensemble de ventilation 1 est conçu pour être installé dans un logement 10 d'un bâtiment de logements collectifs (non représenté). Le logement 10 comprend des pièces dites techniques 11 et des pièces principales 12.

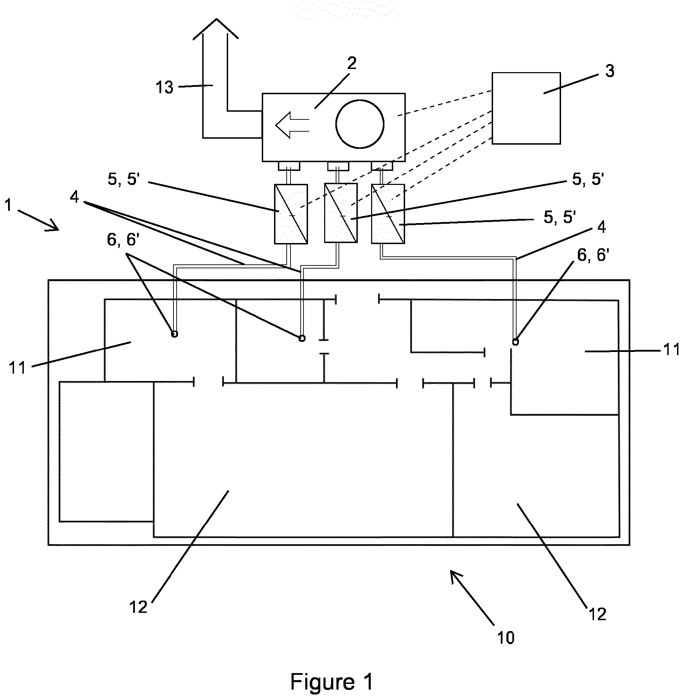

L'ensemble de ventilation 1, comprend un réseau de conduits coopérant avec un ventilateur 2 conformé pour amener ou extraire de l'air dans les conduits 4. Dans l'exemple illustré en figure 1, seules les pièces techniques 11 sont desservies par des conduits 4. En outre, l'ensemble de ventilation comprend un conduit de refoulement 13 pour évacuer vers l'extérieur du bâtiment l'air extrait.

Chaque conduit 4 comprend au moins un registre 5 équipé d'un organe de mesure de type débitmètre 5'. En outre chaque conduit 4 comprend une bouche d'extraction 6 ou d'insufflation d'air 6' débouchant dans une pièce technique 11 du logement 10.

Comme illustré en figure 1, l'ensemble de ventilation 1 comprend une unité de contrôle 3 qui commande les registres 5 et les débitmètres 5' ainsi que le ventilateur 2. Grâce à l'unité de contrôle 3 de l'ensemble de ventilation 1, on peut mettre en oeuvre le procédé de diagnostic du fonctionnement décrit plus haut selon l'invention et commander les registres 5, les débitmètres 5' et le ventilateur 2 pour réaliser des étapes de diagnostic.

Avantageusement, dès que l'ensemble de ventilation 1 est mis en place dans un logement 10, on met en oeuvre le procédé de diagnostic pour déterminer si la mise en place de cet ensemble de ventilation 1 est conforme par rapport à un standard déterminé et s'il n'existe pas de fuite.

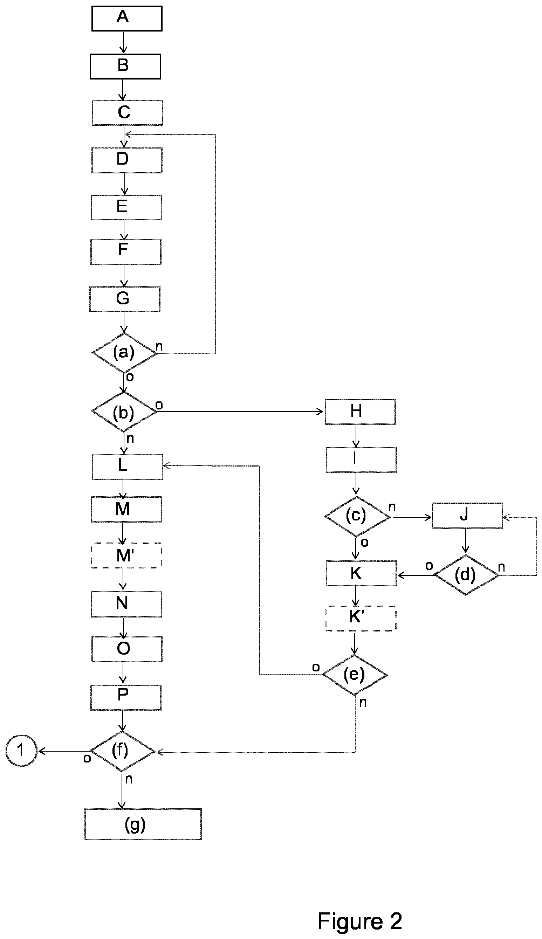

Dans la représentation des étapes du procédé de diagnostic, aux figures 2 à 5, les étapes (a) à (g) ont été ajoutées pour la bonne compréhension du procédé et des figures. Bien entendu, ces étapes ne sont en aucun cas limitatives.

En figure 2, est représenté un premier mode de réalisation du procédé de diagnostic. Dans ce premier mode de réalisation les étapes A à G sont réalisées successivement.

Selon l'exemple illustré en figure 2, l'ensemble de ventilation 1 comprend au moins un organe de mesure 5' conçu pour mesurer le débit d'air en entrée ou en sortie du registre 5 dans chaque conduit 4, ce qui correspond à l'étape A. Ensuite, il faut obturer la ou les bouches 6, 6' d'un conduit 4 à tester (étape B), mettre en fonctionnement le ventilateur 2 à une pression de fonctionnement déterminée (étape C), mesurer le débit d'air au niveau du conduit 4 par l'intermédiaire de l'organe de mesure 5' (étape D). Puis, il faut déterminer la perte de charge réelle du registre 5 du conduit 4 (étape E) au moyen de l'unité de contrôle 3, ce qui permet de déterminer la pression réelle du conduit 4 (étape F). Ainsi, on peut déterminer la perméabilité du conduit 4 (étape G) en fonction de la pression réelle dudit conduit 4 et du débit d'air du conduit 4 mesuré.

Après les étapes A à G, une étape de test (a) est réalisée et consiste à déterminer si les étapes A à G ont été reproduites pour chaque conduit 4 du réseau. Dans la négative, les étapes D, E, F et G sont réitérées. Dans l'affirmative, une autre étape de test (b) est réalisée.

L'étape de test (b) consiste à déterminer s'il existe un besoin de précision sur la valeur de débit de fuite de chaque conduit. Dans la négative, le procédé continue avec les étapes L à P qui seront détaillées ci-après. Dans l'affirmative, on procède à l'exécution des étapes H et I.

Après l'étape I, une étape de test (c) est réalisée consistant à déterminer si le niveau de précision sur la valeur de débit de fuite de chaque conduit est suffisante. Dans l'affirmative, on réalise l'étape K de détermination d'une équation caractérisant la perméabilité. Dans la négative on réalise l'étape J consistant à réitérer les étapes H et I jusqu'à ce que le niveau de précision soit considéré comme suffisant (étape de test (d)) pour passer à l'étape K. La décision quant à la suffisance de précision peut être prise en fonction d'un niveau seuil prédéterminé. Lorsque le niveau seuil est atteint, l'étape K peut être exécutée. Avantageusement, le niveau seuil est prédéterminé en fonction des besoins.

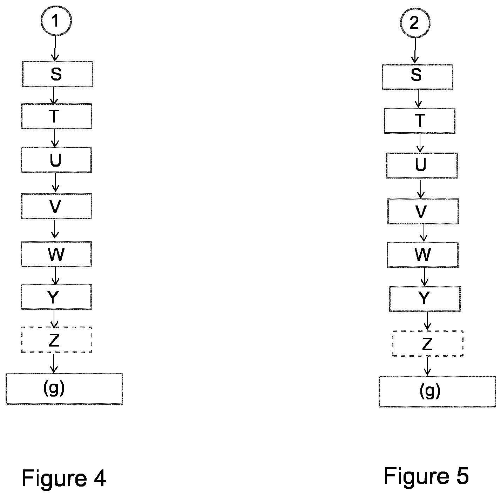

Après l'étape K ou K', une nouvelle étape de test (e) est réalisée pour savoir si le procédé de diagnostic doit continuer. Dans l'affirmative, le procédé de diagnostic continue avec les étapes L à P qui seront détaillées ci-après. Dans la négative, une étape de test (f) est déclenchée pour savoir si un diagnostic du refoulement doit être exécuté. Dans l'affirmative, les étapes S à Y sont réalisées, voir la figure 4. Dans la négative le procédé de diagnostic est arrêté (étape (g)).

Selon l'invention, les étapes A à G et préférentiellement A à K ou A à K' permettent d'évaluer la perméabilité de chaque conduit 4 du réseau de conduits.

Après l'évaluation de la perméabilité, on évalue si l'ensemble de ventilation a été installé correctement et en particulier lorsque l'on souhaite savoir si une gaine de conduit 4 est écrasée ou présente une forme ne permettant pas un écoulement de l'air correct par rapport aux standards. Ainsi, l'ensemble de ventilation 1 met en oeuvre les étapes L à P en utilisant les résultats des valeurs de débit de fuite déterminées précédemment.

Les étapes L à P sont réalisées successivement. Pour ce faire, il faut ouvrir la ou les bouches 6 du conduit 4 à tester ou vérifier que les bouches 6 du conduit 4 sont ouvertes et envoyer une consigne de débit théorique via l'unité de contrôle 3 à un registre 5 du conduit 4. Puis, il faut déterminer une pression théorique de l'ensemble de ventilation 1 en ajoutant une perte de charge théorique du registre 5 du conduit 4, et la valeur de débit de fuite du conduit 4. Ensuite, on met en fonctionnement le ventilateur 2 et on détermine la perte de charge réelle du registre 5 du conduit 4. Lorsque la perte de charge réelle du registre 5 est inférieure à la perte de charge théorique, cela signifie qu'il y a un défaut sur la bouche 6, 6' du conduit 4 testé ou sur le conduit 4 lui-même.

Suite à l'étape P, l'étape de test (f) est déclenchée pour savoir si un diagnostic du refoulement doit être exécuté. Dans l'affirmative, les étapes S à Y sont réalisées, voir la figure 4. Dans la négative le procédé de diagnostic est arrêté (étape (g)).

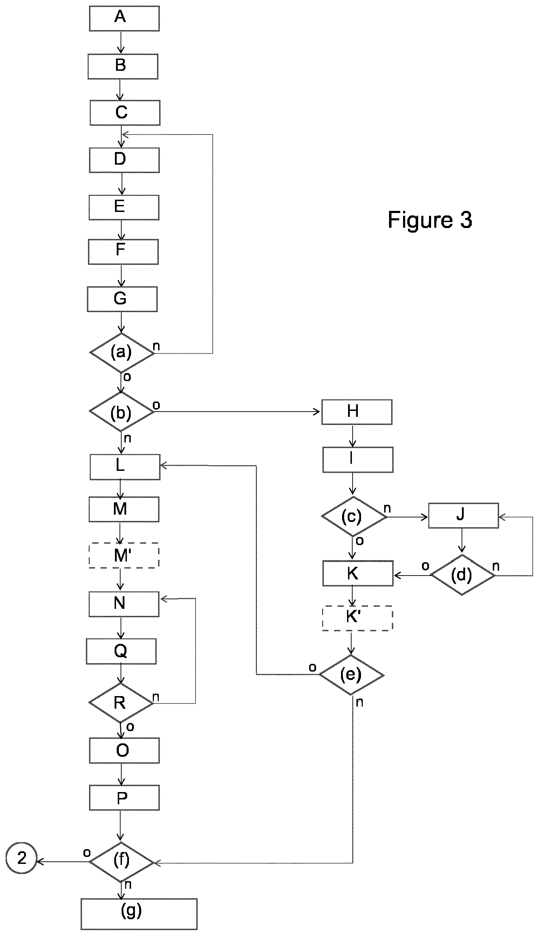

En figure 3 est représenté un deuxième mode de réalisation du procédé de diagnostic.

Le deuxième mode de réalisation diffère uniquement du premier mode de réalisation en ce que les étapes Q et R sont intégrées dans le procédé entre les étapes N et O. Les étapes Q et R permettent d'obtenir le débit théorique souhaité tenant compte de la fuite. L'étape R est une étape test qui consiste à savoir si un équilibre entre la pression théorique du conduit 4 et le débit global théorique du conduit 4 est atteint. Dans l'affirmative, le procédé continue sur l'étape O et dans la négative, le procédé reboucle sur l'étape N, jusqu'à ce que l'équilibre recherché soit atteint.

Suite à l'étape P du deuxième mode de réalisation, l'étape de test (f) est exécutée pour déterminer si un diagnostic du refoulement doit être exécuté. Dans l'affirmative, les étapes S à Y ou S à Z sont réalisées, voir la figure 5. Dans la négative le procédé de diagnostic est arrêté (étape (g)).

Les étapes S à Y ou S à Z, permettent d'évaluer de manière optionnelle si le conduit de refoulement 13 de l'ensemble de ventilation 1 est conforme par rapport aux standards. L'ensemble de ventilation 1 met alors en oeuvre les étapes S à Y ou S à Z du procédé de diagnostic.

Les étapes S à Y sont réalisées succesivement et aboutissent à l'étape de fin de diagnostic (g). Optionnellement, l'étape Z est réalisée après l'étape Y et avant l'étape de fin de procédé de diagnostic (g). En figure 4 est représentée l'évaluation du refoulement 13 suite au premier mode de réalisation tandis qu'en figure 5 est représentée l'évaluation du refoulement 13 suite au deuxième mode de réalisation. Les étapes S à Z restent inchangées quel que soit le mode de réalisation.

Quel que soit le mode de réalisation, les étapes K', M' et Z représentées en pointillé aux figures 2 à 5 sont considérées comme optionnelles.

Le procédé de diagnostic selon l'invention est valable tant pour un ensemble de ventilation à simple flux, que pour un ensemble de ventilation à double flux. Dans un ensemble de ventilation double flux, les bouches d'insufflation jouent le même rôle que les bouches d'extraction et nécessitent une obturation lors de l'évaluation de la perméabilité et une ouverture lors de l'évaluation du conduit pour savoir si la gaine est écrasée ou défectueuse.

## Revendications

1. Procédé de diagnostic d'un ensemble de ventilation (1) comprenant au moins un ventilateur (2), un conduit de refoulement (13), un réseau de conduits comprenant au moins deux conduits (4) comprenant chacun au moins une bouche d'extraction (6) et/ou une bouche d'insufflation (6') d'air, au moins un registre (5) positionné dans chaque conduit (4), une unité de contrôle (3) adaptée pour contrôler ledit registre (5), **caractérisé en ce que** le procédé de diagnostic est réalisé au niveau d'au moins un conduit (4) et comprend les étapes successives suivantes :
- étape A : prévoir au moins un organe de mesure (5') conçu pour mesurer le débit d'air en entrée ou en sortie du registre (5) dans chaque conduit (4), ledit organe de mesure (5') étant commandé par l'unité de contrôle (3),
- étape B : obturer la ou les bouches du conduit (4) à tester,
- étape C : mettre en fonctionnement le ventilateur (2) à une pression de fonctionnement déterminée,
- étape D : mesurer le débit d'air du conduit par l'intermédiaire de l'organe de mesure (5'),
- étape E : déterminer la perte de charge réelle du registre (5),
- étape F : déterminer la pression réelle du conduit (4) en soustrayant la perte de charge réelle du registre (5) à la pression de fonctionnement déterminée appliquée au niveau du ventilateur (2).
- étape G : déterminer la valeur de débit de fuite du conduit (4) en fonction de la pression réelle du conduit (4) déterminée à l'étape F et du débit d'air du conduit (4) mesuré en étape D.

2. Procédé de diagnostic selon la revendication 1, **caractérisé en ce que** le procédé comprend les étapes supplémentaires suivantes :
- étape H : mettre en fonctionnement le ventilateur (2) à une autre pression de fonctionnement déterminée,
- étape I : réitérer les étapes D, E, F et G
- étape K : déterminer une équation caractérisant la perméabilité du conduit (4) à partir des différentes valeurs de débit de fuites obtenues à chaque itération de l'étape G.

3. Procédé de diagnostic selon la revendication 2, **caractérisé en ce que** le procédé de diagnostic est réalisé pour chaque conduit (4) de l'ensemble de ventilation et comprend une étape d'identification K' de la classe de perméabilité de l'ensemble de ventilation (1) à partir de l'équation de perméabilité de chaque conduit (4) issue de l'étape K et des dimensions de chaque conduit (4).

4. Procédé de diagnostic selon l'une quelconque des revendications 1 à 3, **caractérisé en ce que** le procédé comprend les étapes supplémentaires successives suivantes:
- étape L : ouvrir la ou les bouches (6, 6') du conduit (4) à tester ou vérifier que les bouches (6, 6') du conduit (4) sont ouvertes,
- étape M : envoyer à un registre (5) du conduit (4) à tester, une consigne correspondant à un débit global théorique du conduit (4),
- étape N : déterminer une pression de fonctionnement théorique de l'ensemble de ventilation (1), en ajoutant à une pression théorique du conduit (4) soumise au débit global théorique du conduit (4) selon l'étape M, une perte de charge théorique du registre (5) dudit conduit (4) non soumise au débit global théorique du conduit (4),
- étape O: mettre en fonctionnement le ventilateur (2) de manière à atteindre le débit global théorique du conduit (4) et la pression de fonctionnement théorique de l'ensemble de ventilation (1),
- étape P : comparer la perte de charge réelle du registre (5) déterminée à l'étape E avec la perte de charge théorique du registre (5), lorsque la perte de charge réelle du registre (5) est inférieure à la perte de charge théorique, un défaut sur la ou les bouches (6, 6') du conduit (4) testé ou sur le conduit (4) est identifié.

5. Procédé de diagnostic selon la revendication 4, **caractérisé en ce que** le procédé de diagnostic comprend les étapes suivantes :
- étape Q : envoyer une autre consigne correspondant au débit global théorique du conduit (4) selon l'étape M auquel on ajoute un débit de fuite déterminé à l'étape G ou K soumis à la pression théorique déterminée du conduit (4) selon l'étape N.
- étape R: itérer les étapes N et Q de sorte qu'un équilibre entre la pression théorique du conduit (4) et le débit global théorique du conduit (4) soit atteint,
les étapes Q et R étant réalisées préférentiellement successivement entre les étapes N et O.

6. Procédé de diagnostic selon l'une quelconque des revendications 1 à 5, **caractérisé en ce que** le procédé est réalisé pour un réseau de conduits de l'ensemble de ventilation (1), chaque conduit (4) du réseau étant diagnostiqué indépendamment.

7. Procédé de diagnostic selon l'une quelconque des revendications 1 à 6, **caractérisé en ce que** le procédé comprend une évaluation du refoulement de l'ensemble de ventilation (1) par vérification de l'obtention d'un débit global au niveau de l'ensemble de ventilation (1) par rapport à un débit global théorique prédéterminé.

## Patentansprüche

1. Diagnoseverfahren für eine Belüftungsvorrichtung (1), die zumindest einen Lüfter (2), eine Druckrohrleitung (13), ein Rohrleitungsnetz mit zumindest zwei Rohrleitungen (4) umfasst, jede Rohrleitung zumindest eine Luftauslassöffnung (6) und/oder eine Lufteinblasöffnung (6') umfasst, die Belüftungsvorrichtung zumindest eine Drosselklappe (5), die in jeder Rohrleitung (4) positioniert ist, eine Steuerungseinheit (3), die ausgeführt ist, um die besagte Drosselklappe (5) zu steuern, umfasst, **dadurch gekennzeichnet, dass** das Diagnoseverfahren im Bereich zumindest einer Rohrleitung (4) durchgeführt wird, und die folgenden aufeinanderfolgenden Schritte umfasst:
- Schritt A: Vorsehen zumindest eines Messelement (5'), das gestaltet ist, um den Luftvolumenstrom am Eingang oder am Ausgang der Drosselklappe (5) in jeder Rohrleitung (4) zu messen, wobei das besagte Messelement (5') durch die Steuerungseinheit (3) gesteuert wird,
- Schritt B: Verschließen der Öffnung(en) der Rohrleitung (4), die es zu testen gilt,
- Schritt C: Inbetriebnahme des Lüfters (2) mit einem bestimmten Betriebsdruck,
- Schritt D: Messen des Luftvolumenstroms der Rohrleitung anhand des Messelements (5'),
- Schritt E: Bestimmen des tatsächlichen Druckverlustes der Drosselklappe (5),
- Schritt F: Bestimmen des tatsächlichen Drucks der Rohrleitung (4) durch Abzug des tatsächlichen Druckverlustes der Drosselklappe (5) vom bestimmten Betriebsdruck, der im Bereich des Lüfters (2) angewendet wird,
- Schritt G: Bestimmen des Wertes für die Leckrate der Rohrleitung (4) in Abhängigkeit vom tatsächlichen Druck der Rohrleitung (4), der in Schritt F bestimmt wird, und des Luftvolumenstroms der Rohrleitung (4), der in Schritt D gemessen wird.

2. Diagnoseverfahren nach Anspruch 1, **dadurch gekennzeichnet, dass** das Verfahren die folgenden zusätzlichen Schritte umfasst:
- Schritt H: Inbetriebnahme des Lüfters (2) mit einem anderen bestimmten Betriebsdruck,
- Schritt I: Wiederholen der Schritte D, E, F und G
- Schritt K: Bestimmen einer Gleichung zur Charakterisierung der Durchlässigkeit der Rohrleitung (4) ausgehend von verschiedenen Werten für die Leckrate der Rohrleitung, die man bei jeder Wiederholung des Schritts G erhält.

3. Diagnoseverfahren nach Anspruch 2, **dadurch gekennzeichnet, dass** das Diagnoseverfahren für jede Rohrleitung (4) der Belüftungsvorrichtung durchgeführt wird, und einen Schritt K' zur Identifizierung der Durchlässigkeitsklasse der Belüftungsvorrichtung (1) ausgehend von der Gleichung für die Durchlässigkeit einer jeden Rohrleitung (4) umfasst, die aus dem Schritt K und den Abmessungen einer jeden Rohrleitung (4) hervorgeht.

4. Diagnoseverfahren nach einem der Ansprüche 1 bis 3, **dadurch gekennzeichnet, dass** das Verfahren die folgenden zusätzlichen aufeinanderfolgenden Schritte umfasst:
- Schritt L: Öffnen der Öffnung(en) (6, 6') der Rohrleitung (4), die es zu testen gilt, oder überprüfen, ob die Öffnungen (6, 6') der Rohrleitung (4) offen sind,
- Schritt M: Senden an eine Drosselklappe (5) der Rohrleitung (4), die es zu testen gilt, eines Sollwerts, der einem allgemeinen theoretischen Luftvolumenstrom der Rohrleitung (4) entspricht,
- Schritt N: Bestimmen eines theoretischen Betriebsdrucks der Belüftungsvorrichtung (1), indem man zu einem theoretischen Druck der Rohrleitung (4), der einem allgemeinen theoretischen Luftvolumenstrom der Rohrleitung (4) laut Schritt M unterworfen wird, einen theoretischen Druckverlust der Drosselklappe (5) der besagten Rohrleitung (4) hinzufügt, der dem allgemeinen theoretischen Luftvolumenstrom der Rohrleitung (4) nicht unterworfen ist,
- Schritt O: Inbetriebnahme des Lüfters (2), um den allgemeinen theoretischen Luftvolumenstrom der Rohrleitung (4) und den theoretischen Betriebsdruck der Belüftungsvorrichtung (1) zu erreichen,
- Schritt P: Vergleichen des tatsächlichen Druckverlustes der Drosselklappe (5), der im Schritt E bestimmt wird, mit dem theoretischen Druckverlust der Drosselklappe (5), wenn der tatsächliche Druckverlust der Drosselklappe (5) kleiner ist, als der theoretische Druckverlust wird eine Störung an der oder den Öffnungen (6, 6') der getesteten Rohrleitung (4) oder an einer Rohrleitung (4) identifiziert.

5. Diagnoseverfahren nach Anspruch 4, **dadurch gekennzeichnet, dass** das Diagnoseverfahren die folgenden Schritte umfasst:
- Schritt Q: Senden eines anderen Sollwerts, der dem allgemeinen theoretischen Luftvolumenstrom der Rohrleitung (4) laut Schritt M entspricht, zu dem man eine in Schritt G oder K bestimmte Leckrate hinzufügt, welche dem bestimmten theoretischen Druck der Rohrleitung (4) laut Schritt N unterworfen ist,
- Schritt R: Wiederholen der Schritte N und Q, sodass ein Gleichgewicht zwischen dem theoretischen Druck der Rohrleitung (4) und dem allgemeinen theoretischen Luftvolumenstrom der Rohrleitung (4) erreicht wird,
wobei die Schritte Q und R vorzugsweise nacheinander zwischen den Schritten N und O durchgeführt werden.

6. Diagnoseverfahren nach einem der Ansprüche 1 bis 5, **dadurch gekennzeichnet, dass** das Verfahren für ein Rohrleitungsnetz der Belüftungsvorrichtung (1) durchgeführt wird, wobei jede Rohrleitung (4) des Netzes unabhängig voneinander diagnostiziert wird.

7. Diagnoseverfahren nach einem der Ansprüche 1 bis 6, **dadurch gekennzeichnet, dass** das Verfahren eine Bewertung der Verdrängung der Belüftungsvorrichtung (1) durch Überprüfen des Erhalts eines allgemeinen Luftvolumenstroms im Bereich der Belüftungsvorrichtung (1) im Verhältnis zu einem vorbestimmten allgemeinen theoretischen Luftvolumenstrom umfasst.

## Claims

1. A diagnostic method of a ventilation assembly (1) comprising at least one fan (2), a discharge conduit (13), a conduit network comprising at least two conduits (4) each comprising at least one air extraction vent (6) and/or one air blowing vent (6'), at least one damper (5) positioned in each conduit (4), a control unit (3) adapted to control said damper (5), **characterized in that** the diagnostic method is carried out at least at one conduit (4) and comprises the following successive steps:
- step A: providing at least one measuring member (5') designed to measure the airflow rate at the inlet or at the outlet of the damper (5) in each conduit (4), said measuring member (5') being controlled by the control unit (3),
- step B: closing the vent(s) of the conduit (4) to be tested,
- step C: operating the fan (2) at a determined operating pressure,
- step D: measuring the airflow rate of the conduit via the measuring member (5'),
- step E: determining the actual head loss of the damper (5),
- step F: determining the actual pressure of the conduit (4) by subtracting the actual head loss of the damper (5) from the determined operating pressure applied at the fan (2),
- step G: determining the leakage rate value of the conduit (4) depending on the actual pressure of the conduit (4) determined in step F and on the airflow rate of the conduit (4) measured in step D.

2. The diagnostic method according to claim 1, **characterized in that** the method comprises the following additional steps:
- step H: operating the fan (2) at another determined operating pressure,
- step I: reiterating steps D, E, F and G
- step K: determining an equation characterizing the permeability of the conduit (4) from the different leakage rate values obtained at each iteration of step G.

3. The diagnostic method according to claim 2, **characterized in that** the diagnostic method is carried out for each conduit (4) of the ventilation assembly and comprises an identification step K' of the permeability class of the ventilation assembly (1) from the permeability equation of each conduit (4) obtained from step K and from the dimensions of each conduit (4).

4. The diagnostic method according to any one of claims 1 to 3, **characterized in that** the method comprises the following successive additional steps:
- step L: opening the vent(s) (6, 6') of the conduit (4) to be tested or verifying that the vents (6, 6') of the conduit (4) are open,
- step M: sending to a damper (5) of the conduit (4) to be tested, an instruction corresponding to a theoretical overall flow rate of the conduit (4),
- step N: determining a theoretical operating pressure of the ventilation assembly (1), by adding to a theoretical pressure of the conduit (4) subjected to the theoretical overall flow rate of the conduit (4) according to step M, a theoretical head loss of the damper (5) of said conduit (4) not subjected to the theoretical overall flow rate of the conduit (4),
- step O: operating the fan (2) so as to reach the theoretical overall flow rate of the conduit (4) and the theoretical operating pressure of the ventilation assembly (1),
- step P: comparing the actual head loss of the damper (5) determined in step E with the theoretical head loss of the damper (5), when the actual head loss of the damper (5) is less than the theoretical head loss, a defect on the vent(s) (6, 6') of the tested conduit (4) or on the conduit (4) is identified.

5. The diagnostic method according to claim 4, **characterized in that** the diagnostic method comprises the following steps:
- step Q: sending another instruction corresponding to the theoretical overall flow rate of the conduit (4) according to step M to which a leakage rate determined in step G or K is added, which leakage rate is subjected to the determined theoretical pressure of the conduit (4) according to step N.
- step R: iterating the steps N and Q such that a balance between the theoretical pressure of the conduit (4) and the theoretical overall flow rate of the conduit (4) is reached,
the steps Q and R being preferably successively carried out between steps N and O.

6. The diagnostic method according to any one of claims 1 to 5, **characterized in that** the method is carried out for a conduit network of the ventilation assembly (1), each conduit (4) of the network being independently diagnosed.

7. The diagnostic method according to any one of claims 1 to 6, **characterized in that** the method comprises an evaluation of the discharge of the ventilation assembly (1) by verifying the achievement of an overall flow rate at the ventilation assembly (1) relative to a predetermined theoretical overall flow rate.
